# FASCICULE DE BREVET EUROPEEN

(11) **EP 2 813 673 B1**
(45) Date de publication et mention de la délivrance du brevet: **07.03.2018**
(21) Numéro de dépôt: 14172133.2
(22) Date de dépôt: 12.06.2014
(51) Int. Cl.: F01D 11/12, F01D 25/24, B29L 31/00, B29C 70/34, B29C 70/86, B32B 38/00, B32B 37/18

(54) **Secteur de joint annulaire abradable pour turbomachine et procédé de fabrication d'une telle pièce**
Ausschnitt einer ringförmigen Abriebdichtung für Turbomaschine, und Herstellungsverfahren eines solchen Teils
Abradable ring seal sector for a turbomachine and method for manufacturing such a part

(30) Priorité: 13.06.2013 FR 1355494
(43) Date de publication de la demande: 17.12.2014
(73) Titulaire: Composite Industrie, 91070 Bondoufle (FR)
(72) Inventeur: Königs, Karl-Heinz, 91070 BONDOUFLE (FR); Sonois, Gérôme, 92120 MONTROUGE (FR); Martins, Philippe, 91360 VILLEMOISSON sur ORGE (FR)
(74) Mandataire: Gevers & Orès

(56) Documents cités:
- EP-A2- 1 674 671
- FR-A1- 2 339 741
- US-A1- 2009 155 044

## Description

L'invention concerne un secteur de joint annulaire abradable pour turbomachine, et en particulier pour moteur d'aéronef.

L'amélioration du rendement des turbomachines et en particulier celui des réacteurs d'avions est l'objet de nombreuses recherches. Parmi les moyens utilisés pour améliorer ce rendement, la maîtrise des écoulements de fluide au sein des turbomachines est capitale. En particulier, il est souhaitable que l'écart annulaire entre un rotor et le stator correspondant soit réduit au minimum. Les tolérances de fabrication et d'assemblage ainsi que les phénomènes de dilatation due aux conditions de température et de vitesse en fonctionnement interdisent un ajustement parfait. Le jeu entre les extrémités des pales, ou aubes, du rotor et la surface interne annulaire du stator varie en fonction des circonstances.

Il est connu de revêtir l'une au moins des surfaces en regard de l'ensemble rotor-stator d'un matériau spécifiquement choisi pour combler l'espace annulaire. Le revêtement peut être appliqué sur la surface annulaire intérieure du stator ou sur l'extrémité radiale des pales du rotor. Ce revêtement est prévu pour s'user de manière contrôlée en fonctionnement. On désigne alors cette couche de matière par l'adjectif "abradable", au sens de "prévu pour subir une abrasion".

Dans le contexte de l'aéronautique, la surface intérieure du stator correspond à une partie de la surface interne du carter du réacteur, ou virole, entourant la soufflante ("fan" en anglais). Le matériau abradable présente une dureté inférieure à celle du matériau constituant l'extrémité radiale des pales et est progressivement détérioré au contact des pales en rotation. Le remplacement partiel ou total de ce matériau abradable fait partie des opérations usuelles de maintenance.

La fabrication/réparation des pistes abradables est en grande partie réalisée manuellement. Le matériau pour former la piste abradable se présente généralement sous une forme pâteuse et est appliqué par un opérateur au moyen de divers outils tels qu'une spatule dans un logement dédié. Le logement prend la forme d'un anneau ou d'une portion de cylindre ménagé directement dans la surface radialement intérieure du carter de soufflante ou dans un support rapporté et solidarisé au carter. L'opérateur applique alors le matériau à l'état pâteux dans le logement annulaire. De manière imagée, cette opération rappelle l'application d'enduit réalisée par un plâtrier dans le domaine du bâtiment. Cette opération est fastidieuse, induit un coût de fabrication élevé, des délais de fabrication/réparation élevés, une mauvaise reproductibilité, des précautions vis-à-vis de l'hygiène, la santé et la sécurité des opérateurs contraignantes et une qualité des produits difficilement contrôlable.

Après application à l'état pâteux, le matériau peut être passé sous un rouleau pour appuyer le matériau contre le support.

Le matériau pâteux est durci, par exemple par une polymérisation à chaud et sous pression contrôlée. Le matériau acquiert alors ses propriétés abradables. Enfin, un contrôle et un usinage de la surface de travail de la piste abradable doivent être réalisés pour en éliminer les imperfections. Par surface de travail on désigne ici la surface libre de la piste destinée à être "raclée" par l'extrémité des pales. Ces opérations sont elles aussi coûteuses en temps et en argent.

La demande de brevet français FR 2 339 741 donne quelques informations contextuelles relatives aux joints abradables.

En outre, les opérations de maintenances/réparations impliquent de retirer le matériau abradable restant et souillé, préalablement à l'application de matériau abradable neuf. Durant toute les opérations de maintenances/réparations le moteur et donc l'aéronef sont immobilisés, ou du moins les supports de piste abradable. Ceci n'est pas économiquement satisfaisant.

L'invention vient améliorer la situation.

La demanderesse propose un secteur de joint annulaire abradable pour turbomachine. Le secteur comprend :
- un support de renfort,
- un tissu composite incluant des fibres imprégnées de résine polymérisée, et
- une piste de matériau abradable,

Le tissu composite est intercalé entre le support de renfort et la piste de matériau abradable et est adhérisé au support de renfort d'une part et à la piste de matériau abradable d'autre part. Le secteur de joint annulaire abradable présente une résistance à l'arrachement selon une direction perpendiculaire l'interface entre la piste de matériau abradable et le tissu composite d'une part et, entre le tissu composite et le support de renfort d'autre part, supérieure à 5.10⁶ Newton par mètre carré.

Un tel secteur de joint annulaire abradable présente des propriétés améliorées, notamment en tenue mécanique en utilisation. L'entretien et le remplacement de tels secteurs de joint annulaire abradable est facile et rapide. Le temps d'immobilisation lors des révisions des aéronefs munis de tels produits est réduit. Le risque d'apparition de défaut en service est limité.

Le secteur de joint annulaire abradable peut présenter les caractéristiques suivantes, seules ou en combinaison :
- Le support de renfort comprend une structure en nid d'abeilles et possède une masse volumique inférieure à 96 kilogrammes par mètre cube. Le support présente alors une masse faible réduisant la consommation d'énergie du véhicule pourvu de telles pièces.
- Le tissu composite comprend une armure à base de fibres de verre ou de carbone imprégnée d'une résine époxy. Le secteur de joint annulaire présente une masse faible tout en présentant des propriétés mécaniques, notamment de résistance dans le temps, qui confèrent une durée de vie importante au secteur de joint annulaire.
- La piste de matériau abradable comprend de la résine époxy, au moins un agent de réticulation et des microsphères de verre creuses. Une telle composition permet d'obtenir une piste abradable de masse faible et présentant une durée de vie importante.
- La résine époxy comprend l'un au moins des composants de la liste comprenant le Bisphénol-A-épichlorhydrine et le Bisphénol-F-épichlorhydrine. Ces composants chimiques présentent une bonne abradabilité à l'état solide.
- La piste de matériau abradable porte une surface libre munie d'empreintes. Le comportement aérodynamique est maîtrisé et l'efficacité des turbomachines est élevée.
- Le secteur de joint annulaire abradable présente un taux de bulles ou de porosités inférieur à 10%, ou même inférieur à 5%. Les pièces présentent alors une masse faible réduisant la consommation d'énergie du véhicule pourvu de telles pièces. Les risques de propagation de fissures et de défauts sont faibles.

Selon un autre aspect de l'invention, il est proposé un procédé de fabrication d'un secteur de joint annulaire abradable pour turbomachine. Le procédé comprend les étapes suivantes :
a. disposer une pièce de matériau abradable sur une partie au moins du fond d'un moule,
b. couvrir la pièce de matériau abradable et une partie libre du fond du moule avec un tissu composite, le tissu composite comprenant des fibres imprégnées de résine thermodurcissable,
c. couvrir le tissu composite d'un support de renfort, le support de renfort étant placé dans le moule,
d. soumettre le moule à une température adaptée pour provoquer la polymérisation de la résine thermodurcissable et l'adhésion mutuelle de la pièce de matériau abradable, du tissu composite et du support de renfort, et
e. démouler un secteur de joint annulaire abradable pour turbomachine.

Le procédé permet de réduire les étapes de fabrication par rapport aux anciens procédés. Des économies de temps et de mains d'oeuvre sont constatées. La quantité de matière utilisée est réduite. La qualité des pièces obtenues est améliorée.

Le procédé peut présenter les caractéristiques suivantes, seules ou en combinaison :
- Une étape supplémentaire b' est mise en oeuvre préalablement à l'étape b qui consiste à préformer le tissu composite sur un moule convexe. Le risque de d'apparition de défaut du tissu composite est faible. En outre, la détection de défauts éventuels est aisée. Les éventuels défauts peuvent être corrigibles.
- Le fond du moule comprend des empreintes agencées pour former des empreintes complémentaires dans une surface de la pièce de matériau abradable. Une opération supplémentaire et ultérieure de formation d'empreintes par retrait de matière est évitée.

La présente invention sera mieux comprise à la lecture de la description détaillée de quelques modes de réalisation pris à titre d'exemples nullement limitatifs et illustrés par les dessins annexés, sur lesquels :
- les figures 1 et 2 représentent des étapes de fabrication d'une pièce de matériau abradable,
- la figure 3 est une vue en coupe selon la ligne III-III de la figure 2,
- la figure 4 représente une étape de fabrication d'une pièce de matériau abradable,
- la figure 5 est une vue en coupe selon la ligne V-V de la figure 4,
- la figure 6 représente une pièce de matériau abradable,
- la figure 7 est une vue en coupe d'une étape de fabrication d'un secteur de joint annulaire abradable pour turbomachine selon l'invention,
- la figure 8 est une vue en coupe d'un secteur de joint annulaire abradable pour turbomachine disposé dans son moule de fabrication selon l'invention,

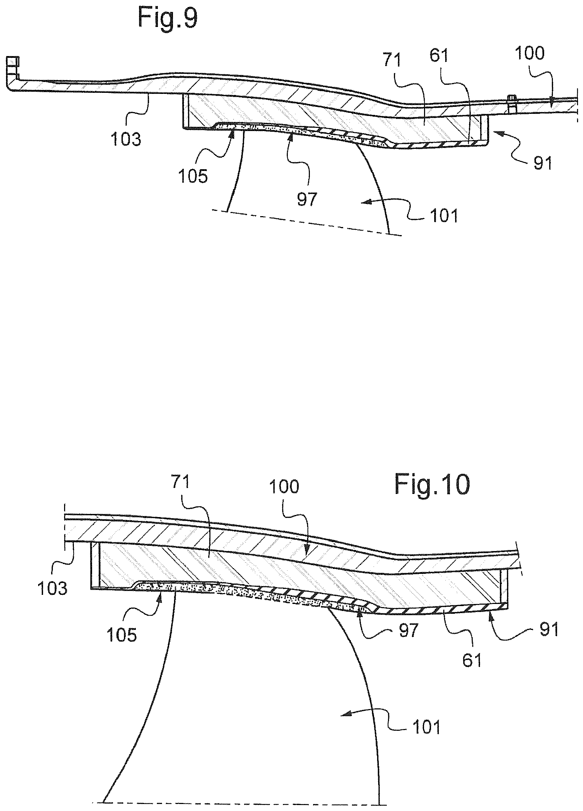

- la figure 9 est une vue en coupe de situation d'un secteur de joint annulaire abradable au sein d'une turbomachine selon l'invention,
- la figure 10 est une vue schématique en coupe d'un secteur de joint annulaire abradable au sein d'une turbomachine selon l'invention, et

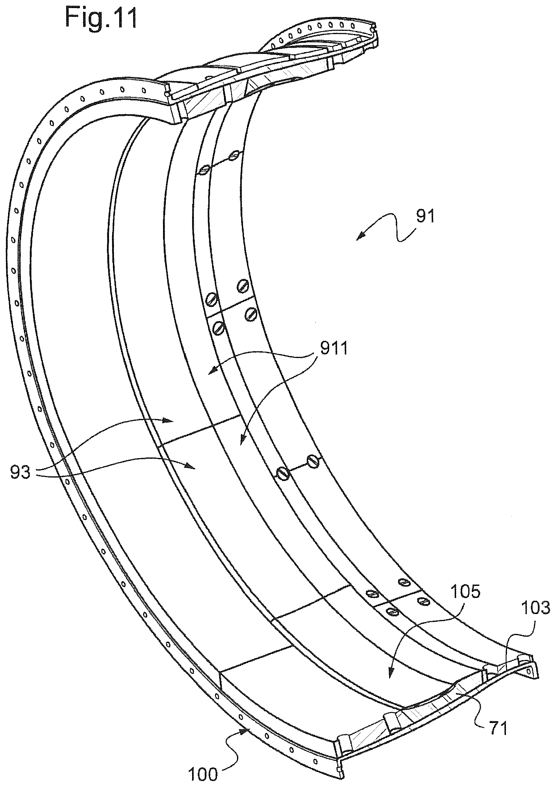

- la figure 11 est une vue en perspective partielle d'un carter de turbomachine portant des secteurs de joint annulaire abradable selon l'invention.

Les dessins annexés comprennent des éléments de caractère certain. Ils pourront donc, non seulement servir à compléter l'invention, mais aussi contribuer à sa définition, le cas échéant. Il est relevé que des éléments comme la géométrie des pièces décrites dans la suite sont difficiles à définir complètement, autrement que par le dessin. En outre, certaines formes et dimensions sont fonction de la destination des pièces.

Une turbomachine comprend une soufflante 101 munie d'aubes et un carter 100 circonférentiel correspondant. On souhaite ici munir la surface annulaire interne 103 du carter 100 d'une piste 105 annulaire de matériau abradable pour former un joint annulaire abradable 91. Le joint annulaire abradable 91 est ici un assemblage de secteurs 911. La piste 105 annulaire est un assemblage de pistes 93 de matériau abradable appartenant chacune à un secteur 911. Pour fabriquer les pistes 93, on commence par fabriquer des pièces 25 moulées, ou pains, de matériau abradable.

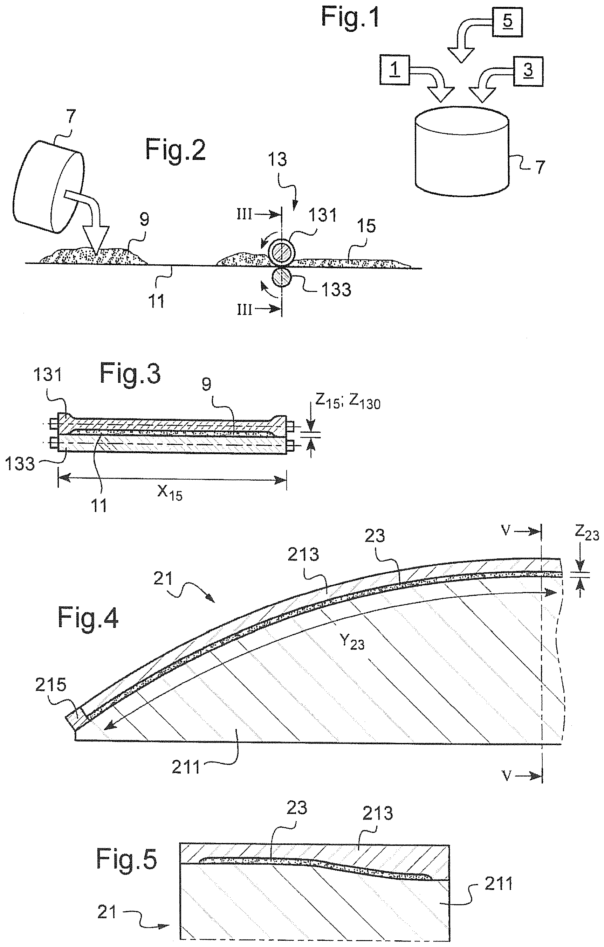

On se réfère d'abord à la figure 1 représentant schématiquement l'opération de mélange d'une résine époxy 1 et d'un agent de réticulation 3 pour fabriquer la pièce 25 moulée de matériau abradable selon l'invention. La résine époxy 1 et l'agent de réticulation 3 sont placés dans un mélangeur 7. En fonction des propriétés souhaitées pour le produit final, d'autres composants 5 peuvent être ajoutés. On cite à titre d'exemple non limitatif les composants 5 additifs suivants, ajoutés seuls ou en combinaison :
- des microsphères de verre creuses (N° CAS : 65997-17-3) telles que celles vendues sous les références "Scotchlite™ Glass Bubbles" par la société 3M de sorte que la masse volumique du mélange soit faible tout en préservant le produit des risques d'apparition de fissures ou défauts,
- des colorants de sorte que le produit final soit visuellement identifiable.

Dans l'exemple décrit ici, une combinaison de différentes résines époxy 1 est utilisée : du bisphénol-A-épichlorhydrine (N° CAS : 25068-38-6), du Bisphénol-F-(épichlorhydrine) (N° CAS : 25064-14-4). L'agent de réticulation 3 comprend de la poly(oxypropylène)diamine (N° CAS : 9046-10-0).

Des kits prêts à mélanger sont vendus sous la référence "*3M™ Scotch-Weld™ Structural Void Filling Compound 3550 FST B*/*A, Kit*" et *"EC-3524 B*/A*"* par la société 3M. La seconde référence comprend des microsphères de verre creuses.

Le mélangeur 7 est ici un pétrin industriel, ou mixeur à spirale, fonctionnant à une vitesse suffisamment lente pour limiter le risque de détérioration des microsphères en verre creuses. Le modèle de mélangeur baptisé "Aquamix" de la société VMI peut par exemple être utilisé. Les composants sont mélangés et malaxés jusqu'à obtenir une pâte 9 d'apparence homogène. La présence de colorants différents dans les composants utilisés peut faciliter le contrôle visuel de l'homogénéité. La pâte 9 obtenue présente une couleur unie.

La mise en contact de la base de polymère, ici la résine époxy, avec l'agent de réticulation, le durcisseur ou l'accélérateur adapté provoque, sinon l'initiation, du moins la polymérisation rapide de la résine. Dans l'exemple décrit ici, la polymérisation est complète après environ 48 heures à température ambiante et sous hotte aspirante. La polymérisation induit ici un durcissement et un passage de l'état de pâte thixotropique à celui de solide. Les étapes de mise en forme doivent être mises en oeuvre avant la polymérisation totale et surtout la solidification du mélange et de préférence au plus tôt après les opérations de mélange.

Comme cela est représenté en figure 2, la pâte 9 obtenue est déposée depuis le mélangeur 7 sur un tapis roulant 11, ou nappe, pour être convoyé vers un laminoir 13. Le laminoir 13 comprend ici un ensemble de deux rouleaux 131, 133, visibles en figure 3. Les deux rouleaux, l'un supérieur 131, l'autre inférieur 133 présentent des axes de rotation parallèles entre eux et perpendiculaires à la direction d'avancement du tapis roulant 11. Cette opération de laminage peut être appelée calandrage dans le sens où la mise en forme de la pâte 9 est entamée durant cette étape. Dans des variantes, le laminoir 13 comprend un seul ou plus de deux rouleaux, par exemple plusieurs paires de rouleaux successives.

Dans l'exemple décrit ici, le rouleau inférieur 133 présente une surface extérieure cylindrique et sensiblement lisse. Le rouleau supérieur 131 comprend une portion de surface extérieure centrale cylindrique et de petit diamètre disposée entre deux portions de surfaces d'extrémités cylindrique de grand diamètre. La portion de surface centrale et chacune des portions de surface d'extrémités sont respectivement reliées par une portion de surface intermédiaire tronconique. La distance séparant l'axe de rotation du rouleau supérieur 131 et l'axe de rotation du rouleau inférieur 133 est adaptée de sorte que chacune des portions de surface d'extrémités cylindriques du rouleau supérieur 131 soient en contact avec la surface extérieure cylindrique du rouleau inférieur 133. L'écart Z₁₃₀ entre la portion de surface extérieure centrale du rouleau supérieur 131 et la surface extérieure cylindrique du rouleau inférieur 133 est sensiblement constant.

Durant le laminage/calandrage, les rouleaux 131, 133 sont mis en rotation selon leur axe de rotation respectif et dans un sens contraire compatible avec l'avancement du tapis roulant 11, de la gauche vers la droite sur la figure 2. En sortie du laminoir 13, la pâte 9 a pris la forme d'une bande de pâte 15. La bande de pâte 15 présente une largeur X₁₅ constante. La largeur X₁₅ comprend les portions d'extrémités résultantes des portions de surface intermédiaire tronconiques du rouleau supérieur 131. La largeur X₁₅ peut être comprise entre 10 et 100 centimètres, par exemple 30 centimètres.

Dans une variante non représentée, le rouleau formant la surface de travail de la pièce 25 de matériau abradable, ici le rouleau inférieur 133, présente une surface matricée. La surface matricée, c'est-à-dire munie d'empreintes, est agencée pour former par pression des empreintes complémentaires dans la surface de travail de la bande de pâte 15. La surface matricée peut aussi être portée par un rouleau distinct de celui du laminoir 13. Une surface non lisse, avec des empreintes ou des sillons, permet d'améliorer encore l'efficacité du joint annulaire abradable 91 en fonctionnement.

La bande de pâte 15 présente une épaisseur Z₁₅ sensiblement constante à l'exception des portions d'extrémités dans la direction de sa largeur. Ces dernières présentent une forme biseautée résultante des portions de surface intermédiaire tronconiques du rouleau supérieur 131. L'épaisseur Z₁₅ est sensiblement égale à l'écart Z₁₃₀. Ici, l'épaisseur Z₁₅ est comprise entre 5 et 15 millimètres, par exemple 7 millimètres. En variante, l'épaisseur Z₁₅ peut varier dans la largeur de la bande de pâte 15, par exemple entre 7 et 11 millimètres. En sortie du laminage, la bande de pâte 15 est produite de manière sensiblement continue. Le laminage est ici réalisé à température ambiante. Le laminage est ici réalisé à vitesse sensiblement constante, par exemple entre 1 et 30 mètres linéaires par minute.

Dans une étape ultérieure non représentée, la bande de pâte 15 est sectionnée en tronçons 23. La bande de pâte 15 est mise à longueur. Les tronçons 23 présentent une longueur Y₂₃ sensiblement identique pour chaque tronçon 23. La largeur X₂₃ et l'épaisseur Z₂₃ du tronçon 25 sont inchangées par rapport à celles X₁₅ et Z₁₅ de la bande de pâte 15. En variante, la coupe de la bande de pâte 15 en tronçons 23 est réalisée à la suite du laminage, par exemple sur la même chaîne de fabrication.

La longueur Y₂₃, la largeur X₂₃ et l'épaisseur Z₂₃ du tronçon 23 correspondent sensiblement à celles de la pièce 25 de matériau abradable que l'on souhaite produire. Ces dimensions sont adaptées pour correspondre à un logement 97 prévu en surface interne 103 d'un carter 100 de soufflante 101 de turbomachine. Le logement 97 peut aussi être ménagé dans un support 71 de renfort solidaire dudit carter 100.

Comme représenté en figure 4, un tronçon 23 est disposé dans un moule 21. Sur la figure 4, une moitié seulement de l'assemblage est représenté, celui-ci présentant un plan de symétrie correspondant à l'axe V-V. Le moule 21 comprend une base 211 et un couvercle 213. Le moule 21 comprend en outre des cales 215 bloquant le tronçon 23 dans le moule 21. La base 211, le couvercle 213 et les cales 215 sont agencés pour former, à l'état assemblé et fermé, un logement intérieur présentant les formes et dimensions finales souhaitées de la pièce 25 de matériau abradable. Cette forme et ces dimensions correspondent sensiblement à celles du logement 97 prévu en surface interne 103 du carter 100 de soufflante 101 de turbomachine. Le tronçon 23 de pâte est, ici, soumis à des températures adaptées pour provoquer ou accélérer la polymérisation du tronçon 23. La température est, ici, comprise entre environ 50 et 80 °C, par exemple 60°C. Après une durée de polymérisation adaptée en fonction de la composition et des dimensions du tronçon 23, la pièce 25 de matériau abradable à l'état durci est démoulée. La pièce 25 de matériau abradable est préformée.

La pièce 25 de matériau abradable a la forme d'un secteur d'anneau de largeur X₂₅, de longueur circonférentielle Y₂₅ et d'épaisseur Z₂₅. Ces dimensions sont sensiblement homogènes dans la pièce 25. Ces dimensions sont respectivement et sensiblement similaires à celles X₂₃, Y₂₃ et Z₂₃ du tronçon 23. La forme incurvée de la pièce 25 est fixée par le durcissement.

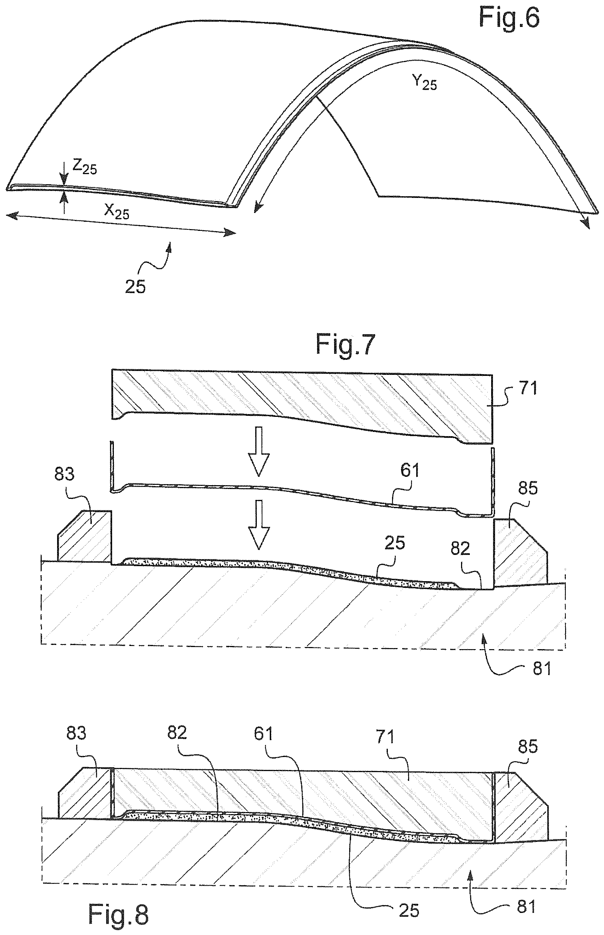

Un exemple de pièce 25 de matériau abradable est représenté en figure 6. La pièce 25 de matériau abradable représenté ici prend la forme d'une coque à une seule dimension de courbure dans le plan perpendiculaire à la direction de la largeur. La pièce 25 de matériau abradable est de largeur X₂₅ et d'épaisseur Z₂₅ sensiblement constantes, à l'exception de l'épaisseur des extrémités de forme biseautée. La valeur de la courbure dépend de celle du logement 97 dans le carter 100 et de la position radiale de la piste 93 dans la turbomachine. Autrement dit, la courbure dépend du diamètre final de la piste abradable 105 du joint annulaire abradable 91.

La longueur Y₂₅ de la pièce 25 de matériau abradable correspond à un secteur d'anneau du joint annulaire abradable 91. Dans l'exemple décrit ici, cinq pièces 25 de matériau abradable, représentant chacune environ 72° de l'anneau complet sont nécessaires pour fabriquer cinq secteurs 911 du joint annulaire abradable 91.

Dans l'exemple décrit ici, le joint annulaire abradable 91 est réalisé au moyen d'une combinaison de cinq secteurs 911 sensiblement équivalents, soit environ 72 degrés. Les secteurs annulaires complémentaires peuvent être semblables ou non. De manière générale, la réalisation du joint annulaire abradable 91 par l'assemblage de plusieurs secteurs annulaires répond à des contraintes techniques et de coûts de fabrication, relative notamment à la taille des machines nécessaires aux différentes étapes de fabrication, à l'encombrement du stockage, etc.

En variante, le joint annulaire abradable 91 est réalisé au moyen d'une unique pièce 25 de matériau abradable annulaire (soit 360 degrés). La pièce 25 de matériau abradable est dimensionnée pour la fabrication d'un secteur 911 de joint annulaire abradable 91 d'environ 360°. Dans ce cas un seul secteur 911 de 360° est suffisant et confondu avec le joint annulaire abradable 91 complet lui-même. La réalisation en un seul morceau du joint annulaire 91 permet l'économie des opérations d'assemblage des secteurs 911.

Les pièces de matériau abradable 25 ainsi produites peuvent être stockées ou utilisées de suite pour la fabrication d'un secteur de joint annulaire abradable 91 ou pour la réparation/réfection d'un tel joint annulaire abradable 91.

La figure 7 représente une vue éclatée et en coupe selon un plan perpendiculaire à la longueur de la pièce 25 de matériau abradable. Un moule 81 comprend un fond 82 et des rebords 83, 85. Une pièce 25 de matériau abradable est disposée contre le fond 82 du moule 81. La pièce 25 de matériau abradable peut être obtenue par exemple par la mise en oeuvre du procédé décrit en rapport avec les figures 1 à 6.

Dans une variante, le fond 82 du moule 81 comprend des empreintes. Ces empreintes sont agencées pour former des empreintes complémentaires dans la surface de la pièce 25 de matériau abradable appliquée contre le fond 82. Une surface non lisse, avec des empreintes ou des sillons, permet d'améliorer encore l'efficacité du joint annulaire abradable 91 en fonctionnement.

La pièce 25 de matériau abradable ainsi que les surfaces intérieures du moule 81 restées libres après la disposition de la pièce 25 de matériau abradable sont recouvertes d'un tissu composite 61.

Le tissu composite 61 comprend des fibres imprégnées de résine thermodurcissable. Dans l'exemple décrit ici, les fibres sont des fibres de verre. En variante le tissu composite 61 peut comprendre des fibres de carbone. Le tissu composite 61 comprend ici une armure de renfort dite "satin", par exemple un "satin de 5". L'appellation "satin" signifie que le tissage de l'armure du tissu est réalisé de manière à ce que les points de liage ne se touchent pas. Le "5" signifie que le motif élémentaire du tissage est un carré de 5 mailles sur 5. En variante, le tissu composite 61 comprend une armure de renfort dite "taffetas" ou "toile". L'appellation taffetas ou toile signifie que le tissage de l'armure du tissu est réalisé de manière à ce que chaque fil de chaîne passe alternativement au-dessus et au-dessous de chaque fil de trame et réciproquement. Le grammage de l'armure de renfort peut être compris entre 150 et 350 grammes par mètre carré, par exemple 305 grammes par mètre carré.

Le tissu composite 61 est imprégné ici d'une résine époxy, par exemple de la résine époxy vendue sous la référence "MTM®49L" par la société CYTEC. Le tissu composite 61 est imprégné avec un taux de résine en masse compris entre 30 et 50%, par exemple 43%.

Le terme "tissu composite" peut désigner ici un pli unique ou une superposition de plis, similaires ou non. L'épaisseur voulue est choisie en adaptant les conditions (pression et température) de polymérisation, le nombre de couches mises en oeuvre et/ou des décalages dans la superposition générant des épaisseurs différentes dans une pièce donnée.

La présence de résine dans le tissu composite 61 confère audit tissu imprégné un aspect dit "pégueux". Autrement dit, le tissu composite 61 présente un aspect collant au toucher. Il est intéressant de protéger ledit tissu composite 61 en appliquant sur la surface opposée à la pièce 25 de matériau abradable, un film protecteur. L'utilisation de film protecteur permet, par exemple, d'éviter la pollution, la salissure ou une quelconque détérioration de surface par des poussières ou des débris présents dans l'environnement. L'utilisation de film protecteur permet de réduire l'encombrement des tissus composites 61 durant leur stockage préalable à la fabrication, par exemple en les enroulant sur eux-mêmes ou en les superposant avant la fabrication du secteur 911 de joint annulaire abradable 91. Le film protecteur disposé sur la surface extérieure du tissu composite 61 lors de son application dans le moule 81 facilite l'application du tissu composite 61 sur la pièce 25 de matériau abradable et les surfaces libres du moule 81. En particulier, les outils et/ou les mains des opérateurs sont protégés de la résine contenue dans le tissu composite 61. Le film protecteur peut être retiré après application du tissu composite 61 dans le moule 81.

Dans l'exemple décrit ici, le tissu composite 61 est prédécoupé sensiblement à sa dimension finale. En variante, le tissu composite 61 peut dépasser du moule 81 puis être découpé ultérieurement.

En variante, le tissu composite 61 subit un préformage dans un moule distinct du moule 81. Par exemple, ce moule distinct peut prendre une forme convexe, dite "positive" ou "mâle". Le préformage du tissu composite 61 sur un moule convexe facilite le travail de drapage par l'opérateur. Le tissu composite 61 est partiellement polymérisé sur le moule convexe pour lui conférer une tenue suffisante pour être déplacé. Le tissu composite 61 est alors déplacé dans le moule 81 sans perdre sa préforme. À ce stade, le tissu composite 61 appliqué sur le moule distinct convexe peut être compacté, par exemple par une mise sous vide. Le tissu composite 61 peut être chauffé. Il est obtenu une préforme, ou "matelas en forme semi-rigide". En outre, l'utilisation d'un tissu composite 61 préformé facilite l'opération d'insertion dans le moule 81, représentée en figure 7.

Un support rigidificateur 71 ou de renfort est à son tour placé dans le moule 81 sur le tissu composite 61. Autrement dit, une superposition dite "sandwich" est réalisée dans laquelle le tissu composite 61 est intercalé entre la pièce 25 de matériau abradable en dessous et le support 71 de renfort au-dessus.

Dans l'exemple décrit ici, le support de renfort 71 est un panneau comprenant une structure en nid d'abeilles présentant des propriétés mécaniques suffisantes pour résister aux contraintes spécifiques des réacteurs d'aéronefs tout en ayant une faible masse. Par exemple, des panneaux référencés "Nomex® 1/8 - 4.0" pour des cellules de 1/8 pouce et une masse de 4 livres par pied-cube ou "Nomex® 3.2 - 64" pour des cellules de 3,2 millimètres et une masse de 64 kilogrammes par mètre-cube sont vendus par la société Schutz. Ces panneaux présentent une masse volumique inférieure à 96 kilogrammes par mètre cube, ici 64 kilogrammes par mètre cube. En variante, des panneaux de structure en nids d'abeilles à base d'aluminium peuvent être utilisés.

Le moule 81 est fermé par un contre-moule et au moyen d'une poche à vide non représentés. Le moule 81 et son contenu sont soumis à une température adaptée pour provoquer une polymérisation de la ou des résines imprégnant le tissu composite 61. Lesdites résines sont fluidifiées de sorte à imprégner le support de renfort 71 d'une part et la pièce 25 de matériau abradable d'autre part. À la solidification, une adhésion apparait entre les trois parties formant l'assemblage. Cette étape peut également être réalisée dans un autoclave. L'autoclave permet l'application d'une pression uniforme sur des pièces présentant des formes complexes. L'assemblage des trois parties précitées est réalisé au cours d'une étape commune.

Après une durée de polymérisation adaptée en fonction des résines utilisées, l'ensemble est ramené à température ambiante. Dans l'exemple décrit ici, la polymérisation ou "cocuisson" est réalisée pendant une durée comprise entre 60 et 720 minutes, par exemple environ 90 minutes. La polymérisation est réalisée ici sous une température d'environ 135°C. L'assemblage comprenant le support 71 de renfort, le tissu composite 61 et la pièce 25 de matériau abradable forment alors un secteur 911 de joint annulaire abradable 91. Le secteur 911 de joint annulaire abradable 91 est démoulé depuis le moule 81.

La surface libre du support 71 de renfort et donc du secteur 911 de joint annulaire abradable 91 est destinée à être appliquée et fixée contre la surface interne du carter 100 de turbomachine. La surface libre du support 71 de renfort est usinée et préparée pour une adhésion audit carter 100.

Le ou les secteur(s) 911 de joint annulaire abradable 91 sont fixés au carter 100 de turbomachine, par exemple par collage et/ou polymérisation. La colle utilisée peut être par exemple un film de colle époxy. La colle référencée "Redux® 322" et vendue par la société Hexcel peut être utilisée. Cette fixation peut être mise en oeuvre dans un autoclave. Selon un mode de réalisation les secteurs 911 de joint annulaire abradable 91 sont adhérisés au carter 100 au cours d'une étape commune en autoclave.

Dans le cas d'un joint annulaire abradable 91 réalisé à partir d'au moins deux secteurs 911, le raccord et la continuité des pistes de matériau abradable 93 de chacun des secteurs 911 est contrôlé et les imperfections éventuelles sont corrigées.

Il est alors obtenu un carter 100 de turbomachine dont la surface radialement intérieure 103 supporte un assemblage comprenant, radialement de l'extérieur vers l'intérieur, un support 71 de renfort, une couche de tissu composite 61 et une piste 105 sensiblement continue et annulaire de matériau abradable résultant de la succession des pistes de matériau abradable 93 des secteurs 911.

Le taux de bulles et de porosités est faible, par exemple inférieur à 10% et même inférieur à 5%. Le joint annulaire abradable 91 présente une résistance à l'arrachement amélioré à l'interface entre la piste abradable 105 et les supports de renfort 71 selon une direction radiale de la turbomachine. La résistance à l'arrachement est ici supérieure à 5.10⁶ Newton par mètre carré (500 N.cm⁻²).

Dans le cadre de l'entretient et des réparations, les secteurs 911 usagés nécessitant une réfection ou un remplacement de la piste abradable 93 peuvent être rapidement échangés. Ainsi, les turbomachines, et donc ici les aéronefs, sont immobilisés seulement le temps d'extraire le secteur 911 usagé et de fixer un secteur 911 neuf ou rénové. Le secteur 911 extrait peut être rénové en atelier par la suite.

Le procédé de fabrication décrit ci-dessus permet d'améliorer l'uniformité de la piste abradable 105 annulaire, son taux de défauts (bulles d'air, impuretés, etc.), ses tolérances dimensionnelles et la continuité de la surface radialement intérieure dite de travail par rapport aux techniques antérieures.

Les moyens mis en oeuvre décrits précédemment permettent en outre une part importante d'automatisation conduisant à une reproductibilité améliorée et des coûts et temps de fabrication réduits.

Comme déjà indiqué, ces produits et techniques trouvent principalement une application dans le domaine de l'aéronautique pour la réalisation de joints stator-rotor de turbomachines d'aéronefs. Cependant, ces produits et techniques peuvent être utilisés dans d'autres domaines pour la réalisation de pistes abradables. Il a été constaté qu'un joint stator-rotor selon l'invention permet d'obtenir des performances au moins égales à celles de l'art antérieur, et cela avec une réduction de la perte de matière, une réduction de la pollution des outillages et/ou des mains des opérateurs, une réduction des délais de fabrication et une meilleure reproductibilité. Les collages involontaires et intempestifs du matériau abradable avec d'autres éléments durant la fabrication et les réparations sont limités.

L'assemblage en une seule étape de la piste abradable au tissu composite et au support de renfort permet d'économiser une étape supplémentaire et postérieure d'usinage de ladite piste abradable. En outre, la fabrication préalable et distincte d'une pièce de matériau abradable permet une inspection et une intervention corrective éventuelle sur celle-ci avant son intégration aux autres composants de la turbomachine. Au contraire des techniques antérieures dans lesquelles une pièce de support existante était revêtue d'une pâte abradable, selon l'invention la pièce de support est fabriquée autour de la pièce abradable qui devient une piste abradable.

## Revendications

1. Secteur (911) de joint annulaire abradable (91) pour turbomachine, comprenant :
- un support (71) de renfort,
- un tissu composite (61) incluant des fibres imprégnées de résine polymérisée, et
- une piste de matériau abradable (93),
le tissu composite (61) étant intercalé entre le support (71) de renfort et la piste de matériau abradable (93) et étant adherisé au support (71) de renfort d'une part et à la piste de matériau abradable (93) d'autre part,
**caractérisé en ce que** le secteur (911) de joint annulaire abradable (91) présente une résistance à l'arrachement selon une direction perpendiculaire à l'interface entre la piste de matériau abradable (93) et le tissu composite (61) d'une part et, entre le tissu composite (61) et le support (71) de renfort d'autre part, supérieure à 5.10⁶ Newton par mètre carré.

2. Secteur (911) de joint annulaire abradable (91) selon la revendication 1, dans lequel le support (71) de renfort comprend une structure en nid d'abeilles et possède une masse volumique inférieure à 96 kilogrammes par mètre cube.

3. Secteur (911) de joint annulaire abradable (91) selon l'une des revendications 1 et 2, dans lequel le tissu composite (61) comprend une armure à base de fibres de verre ou de carbone imprégnée d'une résine époxy.

4. Secteur (911) de joint annulaire abradable (91) selon l'une des revendications précédentes, dans lequel la piste de matériau abradable (93) comprend de la résine époxy (1), au moins un agent de réticulation (3) et des microsphères de verre creuses.

5. Secteur (911) de joint annulaire abradable (91) selon la revendication 4, dans lequel la résine époxy (1) comprend l'un au moins des composants de la liste comprenant le Bisphénol-A-épichlorhydrine et le Bisphénol-F-épichlorhydrine.

6. Secteur (911) de joint annulaire abradable (91) selon l'une des revendications précédentes, dans lequel la piste de matériau abradable (93) porte une surface libre munie d'empreintes.

7. Secteur (911) de joint annulaire abradable (91) selon l'une des revendications précédentes, présentant un taux de bulles ou de porosités inférieur à 5%.

8. Procédé de fabrication d'un secteur (911) de joint annulaire abradable (91) pour turbomachines selon une des revendications précédentes, ledit procédé comprenant les étapes suivantes :
a. disposer une pièce (25) de matériau abradable sur une partie au moins du fond (82) d'un moule (81),
b. couvrir la pièce (25) de matériau abradable et une partie libre du fond (82) du moule (81) avec un tissu composite (61), le tissu composite (61) comprenant des fibres imprégnées de résine thermodurcissable,
c. couvrir le tissu composite (61) d'un support (71) de renfort, le support (71) de renfort étant placé dans le moule (81),
d. soumettre le moule (81) à une température adaptée pour provoquer la polymérisation de la résine thermodurcissable et l'adhésion mutuelle de la pièce (25) de matériau abradable, du tissu composite (61) et du support de renfort (71), et
e. démouler un secteur (911) de joint annulaire abradable (91) pour turbomachine.

9. Procédé selon la revendication 8, dans lequel, une étape supplémentaire est mise en oeuvre préalablement à l'étape b :
a'. préformer le tissu composite (61) sur un moule convexe.

10. Procédé selon l'une des revendications 8 et 9, dans lequel le fond (82) du moule (81) comprend des empreintes agencées pour former des empreintes complémentaires dans une surface de la pièce (25) de matériau abradable.

## Patentansprüche

1. Abschnitt (911) einer ringförmigen Abriebdichtung (91) für eine Turbomaschine, Folgendes aufweisend:
- Einen Verstärkungsträger (71),
- ein Verbundgewebe (61), das mit einem polymerisierten Harz getränkte Fasern enthält, und
- eine Abriebmaterialbahn (93),
wobei das Verbundgewebe (61) zwischen dem Verstärkungsträger (71) und der Abriebmaterialbahn (93) eingefügt und einerseits am Verstärkungsträger (71) und andererseits an der Abriebmaterialbahn (93) in Anhaftung gebracht ist,
**dadurch gekennzeichnet, dass**
der Abschnitt (911) der ringförmigen Abriebdichtung (91) eine Reißfestigkeit in einer zur Grenzfläche zwischen der Abriebmaterialbahn (93) und dem Verbundgewebe (61) einerseits und zwischen dem Verbundgewebe (61) und dem Verstärkungsträger (71) andererseits senkrechten Richtung aufweist, die über 5.10⁶ Newton pro Quadratmeter beträgt.

2. Abschnitt (911) einer ringförmigen Abriebdichtung (91) nach Anspruch 1, wobei der Verstärkungsträger (71) eine Wabenstruktur hat und eine Dichte von unter 96 Kilogramm pro Kubikmeter besitzt.

3. Abschnitt (911) einer ringförmigen Abriebdichtung (91) nach einem der Ansprüche 1 und 2, wobei das Verbundgewebe (61) eine mit einem Epoxidharz getränkte Armierung auf Basis von Glas- oder Kohlefasern hat.

4. Abschnitt (911) einer ringförmigen Abriebdichtung (91) nach einem der vorhergehenden Ansprüche, wobei die Abriebmaterialbahn (93) Epoxidharz (1), mindestens ein Vernetzungsmittel (3) und hohle Mikrokugeln aus Glas umfasst.

5. Abschnitt (911) einer ringförmigen Abriebdichtung (91) nach Anspruch 4, wobei das Epoxidharz (1) mindestens einen der Bestandteile der Liste umfasst, die Bisphenol-A-Epichlorhydrin und Bisphenol-F-Epichlorhydrin umfasst.

6. Abschnitt (911) einer ringförmigen Abriebdichtung (91) nach einem der vorhergehenden Ansprüche, wobei die Abriebmaterialbahn (93) eine mit Abdrücken versehene freie Oberfläche trägt.

7. Abschnitt (911) einer ringförmigen Abriebdichtung (91) nach einem der vorhergehenden Ansprüche, einen Blasen- oder Porositätsanteil von unter 5% aufweisend.

8. Verfahren zum Herstellen eines Abschnitts (911) einer ringförmigen Abriebdichtung (91) für eine Turbomaschine nach einem der vorhergehenden Ansprüche, wobei das Verfahren die folgenden Schritte umfasst:
a. ein Abriebmaterialteil (25) auf einem Teil zumindest des Grunds (82) einer Form (81) anzuordnen,
b. das Abriebmaterialteil (25) und einen freien Teil des Grunds (82) der Form (81) mit einem Verbundgewebe (61) zu bedecken, wobei das Verbundgewebe (61) mit wärmehärtbarem Harz getränkte Fasern enthält,
c. das Verbundgewebe (61) mit einem Verstärkungsträger (71) zu bedecken, wobei der Verstärkungsträger (71) in die Form (81) eingesetzt wird,
d. die Form (81) einer Temperatur auszusetzen, die dazu angepasst ist, die Polymerisation des wärmehärtbaren Harzes und die gegenseitige Anhaftung des Abriebmaterialteils (25), des Verbundgewebes (61) und des Verstärkungsträgers (71) zu bewirken, und
e. einen Abschnitt (911) einer ringförmigen Abriebdichtung (91) für eine Turbomaschine aus der Form zu entnehmen.

9. Verfahren nach Anspruch 8, wobei vor dem Schritt b ein zusätzlicher Schritt eingesetzt wird:
a'. Vorformen des Verbundgewebes (61) auf einer konvexen Form.

10. Verfahren nach einem der Ansprüche 8 und 9, wobei der Grund (82) der Form (81) Abdrücke hat, die ausgebildet sind, um komplementäre Abdrücke in einer Oberfläche des Abriebmaterialteils (25) zu bilden.

## Claims

1. Segment (911) of an abradable ring seal (91) for a turbomachine, comprising
- a reinforcing support (71),
- a composite fabric (61) including fibres impregnated with polymerised resin, and
- a track of abradable material (93),
the composite fabric (61) being interposed between the reinforcing support (71) and the track of abradable material (93) and being bonded to the reinforcing support (71), on the one side, and to the track of abradable material (93), on the other side,
**characterized in that** the segment (911) of an abradable ring seal (91) has a resistance to tearing in a direction perpendicular to the interface between the track of abradable material (93) and the composite fabric (61), on the one hand, and between the composite fabric (61) and the reinforcing support (71), on the other hand, greater than 5.10⁶ newtons per square meter.

2. Segment (911) of an abradable ring seal (91) according to claim 1, wherein the reinforcing support (71) comprises a honeycomb structure and has a density of less than 96 kilograms per cubic meter.

3. Segment (911) of an abradable ring seal (91) according to any one of claims 1 and 2, wherein the composite fabric (61) comprises a weave which is based on glass fibres or carbon fibres and is impregnated with an epoxy resin.

4. Segment (911) of an abradable ring seal (91) according to any one of the preceding claims, wherein the track of abradable material (93) comprises epoxy resin (1), at least one crosslinking agent (3) and hollow glass microspheres.

5. Segment (911) of an abradable ring seal (91) according to claim 4, wherein the epoxy resin (1) comprises at least one of the components from the list comprising bisphenol-A-epichlorhydrin and bisphenol-F-epichlorhydrin.

6. Segment (911) of an abradable ring seal (91) according to any one of the preceding claims, wherein the track of abradable material (93) carries a free surface provided with impressions.

7. Segment (911) of an abradable ring seal (91) according to any one of the preceding claims, having a bubble or porosity ratio of less than 5%.

8. Process for the manufacture of a segment (911) of an abradable ring seal (91) for turbomachines, according to one of the preceding claims, said process comprising the following steps:
a. to arrange a piece (25) of abradable material on at least part of the base (82) of a mold (81),
b. to cover the element (25) of abradable material and a free part of the base (82) of the mold (81) with a composite fabric (61), the composite fabric (61) comprising fibres impregnated with thermosetting resin,
c. to cover the composite fabric (61) with a reinforcing support (71), the reinforcing support (71) being placed in the mold (81),
d. to submit the mold (81) to a temperature adapted to cause polymerisation of the thermosetting resin and the mutual adhesion of the piece (25) of abradable material, the composite fabric (61) and the reinforcing support (71), and
e. to eject a segment (911) of an abradable ring seal (91) for a turbomachine.

9. Process according to claim 8, wherein an additional step is carried out before step b:
a': the composite fabric (61) is preformed on a convex mold.

10. Process according to any one of claims 8 and 9, wherein the base (82) of the mold (81) has impressions arranged to form complementary impressions in a surface of the piece (25) of abradable material.
